# EUROPEAN PATENT APPLICATION

(11) **EP 3 163 274 A1**
(43) Date of publication of application: **03.05.2017**
(21) Application number: 15815945.9
(22) Date of filing: 22.04.2015
(51) Int. Cl.: G01L 1/22, G01L 5/00

(54) **WIND-POWERED ELECTRICITY GENERATING APPARATUS, SYSTEM FOR MONITORING WIND-POWERED ELECTRICITY GENERATING APPARATUS, AND METHOD FOR MONITORING WIND-POWERED ELECTRICITY GENERATING APPARATUS**

(30) Priority: 30.06.2014 JP 2014134208
(71) Applicant: Hitachi, Ltd., Chiyoda-ku Tokyo 100-8280 (JP)
(72) Inventor: TAKAHASHI Hiroki, Tokyo 100-8280 (JP); OZEKI Yoshio, Tokyo 100-8280 (JP)
(74) Representative: Strehl Schübel-Hopf & Partner
(86) International application number: PCT/JP2015/062177
(87) International publication number: WO 2016/002321

(57) **Abstract**

Provided is a wind turbine generator capable of monitoring strain on a blade or tower of a wind turbine with high accuracy. The wind turbine generator includes: a tower which is installed on the ground or the sea and acts as a support column of a generator; a nacelle which is provided on the tower and has the generator embedded therein; and a rotor which is provided at one end of the nacelle and is constituted by a hub and a plurality of blades that convert wind power into rotational energy, in which at least one or more blade among the plurality of blades is provided with a semiconductor strain sensor which detects strain that occurs in the corresponding blade.

## Description

### TECHNICAL FIELD

The present invention relates to a wind turbine generator, a monitoring system of the wind turbine generator, and a monitoring method of the wind turbine generator.

### BACKGROUND ART

Expansion of introduction of renewable energies such as solar power and wind power generation has attracted great expectations from the viewpoint of securing stable energy resources and preventing global warming. Regarding design of a wind turbine generator system, various studies have been conducted to reduce power generation costs and facilitate establishment of power generation business through an improvement in power generation efficiency, an increase in the size of a wind turbine generator system, a reasonable construction method, a reduction in construction period, and simplification of maintenance, repair and overhaul.

Due to the increase in the size of a wind turbine generator, in a wind turbine generator system on a scale of several megawatts, the length of a blade of the wind turbine and the height of a tower reaches tens of meters. Therefore, forces (moments) exerted on the blade or tower significantly vary due to variations in the speed or direction of the wind blowing toward the wind turbine, and a high strain occurs in the blade or tower. Due to this strain as a factor, fatigue is accumulated on the blade or tower, possibly leading to accidents such as damage to the blade or collapse of the tower.

An example of a related art of the technical field includes a technique as in Patent Document 1. Patent Document 1 discloses "a wind turbine blade including: a blade on which stress caused by a wind force is exerted; stress measurement or strain measurement resistance wires embedded in the blade to measure the stress or to measure strain of the blade caused by the stress".

In addition, Patent Document 2 discloses "a wind turbine generator apparatus including: a hub; a rotating mechanism provided with a plurality of blades radially disposed around a rotating shaft of the hub; a nacelle provided with a generator driven by the rotating mechanism; a tower supporting the nacelle; a first strain gauge and a second strain gauge which are provided in at least one of the plurality of blades and are disposed in series in a longitudinal direction of the blade; and a vibration calculation unit which calculates a vibration component in a primary mode and a vibration component in a secondary mode of the blade by using signals output from the first and second strain gauges".

### CITATION LIST

### PATENT DOCUMENT

Patent Document 1: JP 2004-301030 A
Patent Document 2: JP 2013-231409 A

### SUMMARY OF THE INVENTION

### PROBLEMS TO BE SOLVED BY THE INVENTION

As described above, in the wind turbine generator system, for stable power supply, it is effective to more accurately monitor strain (stress) that occurs in the blade or tower and stop the wind turbine generator before damage or collapse, or perform maintenance repair such as replacement of the blade or reinforcement of the tower as necessary.

According to the wind turbine blade of Patent Document 1, stress or strain exerted on the blade can be measured in time series and the remaining life thereof can be predicted. In addition, time to replace the blade can be predicted.

However, since the wind turbine blade has a structure in which the stress measurement resistance wires are embedded in the blade, positions where the resistance wires can be provided are limited. In addition, the blade itself requires processing for embedding the resistance wires in the blade, and thus a reduction in the strength of the blade cannot be avoided. In addition, since the resistance wires cannot be attached to a blade which is not processed, the design of the embedment of the resistance wires has to be made in a stage of the design of a blade of a wind turbine generator.

Therefore, it is difficult to add a function of monitoring the strain of the blade according to the method of Patent Document 1 to a wind turbine generator after construction. In addition, due to the internal embedment structure, operations such as repair or correction of the resistance wire are not easy.

According to the wind turbine generator apparatus of Patent Document 2, it is thought that it is possible to accurately monitor vibrations of the blade in real time.

However, for measurement of the strain, a strain gauge in the related art is used. In addition, in order to install the strain gauge on the blade, the blade itself also requires processing for attaching the strain gauge thereto, and in terms of the measurement accuracy of the strain gauge or variations in the strain caused by the processing of the blade, the strain gauge is insufficient for accurately monitoring the strain over a long period of time.

In addition, as in Patent Document 1, due to the structure embedded in the blade, positions where the resistance wires can be provided are limited. In addition, there is also a problem of a reduction in strength due to the processing of the blade. Furthermore, the design for the embedment and attachment of a strain sensor is necessary. Moreover, there is a difficulty in maintenance such as repair.

The present invention provides a wind turbine generator capable of monitoring strain on a blade or tower of a wind turbine with high accuracy.

The present invention also provides a monitoring system of a wind turbine generator capable of monitoring strain on a blade or tower of a wind turbine with high accuracy.

The present invention also provides a monitoring method of a wind turbine generator capable of monitoring strain on a blade or tower of a wind turbine with high accuracy.

### SOLUTIONS TO PROBLEMS

In order to solve the problems, according to the present invention, there is provided a wind turbine generator including: a tower which is installed on the ground or the sea and acts as a support column of a generator; a nacelle which is provided on the tower and has the generator embedded therein; and a rotor which is provided at one end of the nacelle and is constituted by a hub and a plurality of blades that convert wind power into rotational energy, in which at least one blade among the plurality of blades is provided with a semiconductor strain sensor which detects strain that occurs in the corresponding blade.

In addition, according to the present invention, there is provided a monitoring system of a wind turbine generator, in which the wind turbine generator includes: a tower which is installed on the ground or the sea and acts as a support column of a generator; a nacelle which is provided on the tower and has the generator embedded therein; and a rotor which is provided at one end of the nacelle and is constituted by a hub and a plurality of blades that convert wind power into rotational energy, at least one blade among the plurality of blades is provided with a semiconductor strain sensor which detects strain that occurs in the corresponding blade, and by transmitting a strain value of the blade detected by the semiconductor strain sensor to an external monitoring server by a wireless communication unit, the strain value of the blade is monitored.

In addition, according to the present invention, there is provided a monitoring method of a wind turbine generator, in which the wind turbine generator includes: a tower which is installed on the ground or the sea and acts as a support column of a generator; a nacelle which is provided on the tower and has the generator embedded therein; and a rotor which is provided at one end of the nacelle and is constituted by a hub and a plurality of blades that convert wind power into rotational energy, at least one blade among the plurality of blades is provided with a semiconductor strain sensor which detects strain that occurs in the corresponding blade, and by transmitting a strain value of the blade detected by the semiconductor strain sensor to an external monitoring server by a wireless communication unit, the strain value of the blade is monitored.

### EFFECTS OF THE INVENTION

According to the present invention, a wind turbine generator capable of monitoring strain on a blade or tower of a wind turbine with high accuracy can be realized.

In addition, a monitoring system of a wind turbine generator capable of monitoring strain on a blade or tower of a wind turbine with high accuracy can be realized.

In addition, a monitoring method of a wind turbine generator capable of monitoring strain on a blade or tower of a wind turbine with high accuracy can be realized.

Other objects, configurations, and effects will be more apparent from the following description of embodiments.

### BRIEF DESCRIPTION OF THE DRAWINGS

Fig. 1 is a view illustrating a schematic configuration of a wind turbine generator according to an embodiment of the present invention.
Fig. 2 is a view illustrating a schematic configuration of the wind turbine generator according to the embodiment of the present invention.
Fig. 3 is a view illustrating a partial section of the wind turbine generator according to the embodiment of the present invention.
Fig. 4 is a graph showing variations in strain sensitivity (strain sensor value) due to the difference between adhesives.
Fig. 5 is a view illustrating a schematic configuration of the wind turbine generator according to the embodiment of the present invention.
Fig. 6 is a view illustrating a schematic configuration of the wind turbine generator according to the embodiment of the present invention.
Fig. 7 is a view illustrating a schematic configuration of the wind turbine generator according to the embodiment of the present invention.
Fig. 8 is a view illustrating a schematic configuration of the wind turbine generator according to the embodiment of the present invention.
Fig. 9 is a view illustrating a schematic configuration of the wind turbine generator according to the embodiment of the present invention.
Fig. 10 is a view illustrating a schematic configuration of the wind turbine generator according to the embodiment of the present invention.
Fig. 11 is a view illustrating a partial section of the wind turbine generator according to the embodiment of the present invention.
Fig. 12 is a view illustrating a schematic configuration of a monitoring system of the wind turbine generator according to the embodiment of the present invention.

### MODE FOR CARRYING OUT THE INVENTION

Hereinafter, examples of the present invention will be described with reference to the drawings.

### Example 1

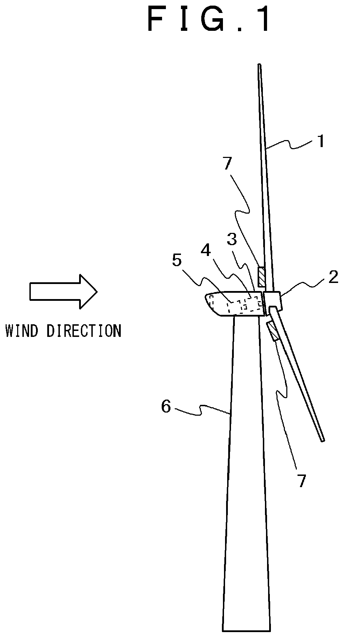

A wind turbine generator in an embodiment of the present invention will be described with reference to Figs. 1 to 3. Fig. 1 illustrates a downwind type wind turbine generator using the present invention. As illustrated in Fig. 1, in the wind turbine generator of this example, a nacelle 3 is provided at the top of a tower 6 provided on the ground or the sea, and a gearbox, that is a speed increaser 4 and a generator 5 are embedded in the nacelle 3. In addition, "on the sea" does not strictly mean that all the components of the wind turbine generator are present on the sea surface and indicate that a portion of the tower 6 appears on the sea surface. That is, a portion of the tower 6 may be in seawater and the blade 1 may be at a position higher than sea surface.

The tower 6 is installed on a foundation block made of concrete or the like and is preferably not in contact with seawater.

A rotor constituted by a hub 2 and a plurality of blades 1 is provided at one end of the nacelle 3. The hub 2 is connected to the speed increaser 4 or the generator 5 through a rotating shaft. As the plurality of blades 1 rotate together with the hub in the wind, wind force is converted into rotational energy. As the rotational energy is transmitted to the generator 5 via the rotating shaft and the speed increaser 4, power is generated.

The tower 6 acts as a support column that supports the hub 2 and the plurality of blades 1 provided at one end of the nacelle 3, that is, wind turbine, and the speed increaser 4 and the generator 5 embedded in the nacelle 3.

In addition, the speed increaser 4 may not be necessarily configured to increase speed, and a direct coupled connection mechanism which does not increases speed, such as a coupling, may also be employed. In this case, the speed increaser 4 is not employed, and thus the structure of the apparatus becomes simple. As well as the direct coupled connection mechanism, when a multipolar type is employed as the generator 5, the rotational speed of the blade 1 and the rotation frequency of the generator 5 may be configured to be matched to each other. In a case where the multipolar generator 5 is employed, there may be a case where the structure of the nacelle 3 increases in size.

The plurality of blades 1 is obtained, for example, by processing glass-fiber reinforced plastic into a hollow shape, and a semiconductor strain sensor 7 which detects strain (stress) that occurs in the blade 1 is provided on each inner wall surface on the windward side.

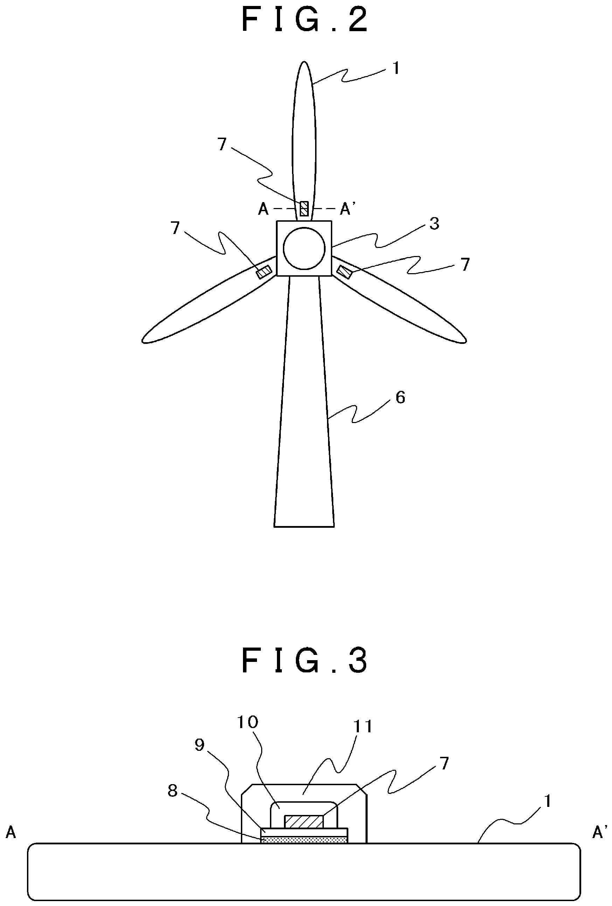

Fig. 2 illustrates a view of the wind turbine generator of Fig. 1 viewed from the windward side. As illustrated in Fig. 2, the semiconductor strain sensor 7 is provided on the inner wall surface of the blade 1 on the windward side at the root portion of the blade 1, that is, in the vicinity of a connection portion between the blade 1 and the hub 2.

Here, the semiconductor strain sensor 7 is provided at the root portion of the blade 1, that is, in the vicinity of the connection portion between the blade 1 and the hub 2 because, although the connection portion between the blade 1 and the hub 2 is supported by the hub 2 and thus has relatively high strength and resistance to strain (stress), the highest strain (stress) of the blade 1 occurs at a position slightly distant from the connection portion, that is, in the vicinity of the connection portion between the blade 1 and the hub 2 and there is a high possibility that the blade 1 may be damaged by the strain.

Fig. 3 illustrate a specific configuration of the semiconductor strain sensor 7 provided on the inner wall surface of the blade 1. Fig. 3 shows a section A-A' in Fig. 2. On the inner wall surface of the blade 1 on the windward side, the semiconductor strain sensor 7 is adhered and fixed to the blade 1 by an adhesive 8 via a base substrate 9 such as a metal substrate. Adhesion and fixing means that the base substrate 9 is adhered onto the inner wall surface of the blade by the adhesive 8 so as to be held or connected.

In addition, it is needless to say that as illustrated in Fig. 3, the semiconductor strain sensor 7 can also be adhered to not only one inner wall surface but also the other inner wall surface. Otherwise, adhesion to both the inner wall surfaces is possible. In the case of attaching the semiconductor strain sensors 7 to both the inner wall surfaces, a measurement method such as removal of effects of vibrations and the like can be used. In addition, even in a case where one of the semiconductor strain sensors 7 is broken, measurement can be performed by the other sensor.

Here, a region to which the adhesive 8 is applied is wider than at least the area of a surface of the semiconductor strain sensor 7 facing the base substrate 9. This is because the stability of the semiconductor strain sensor 7 can be enhanced by securing the application region having an area wider than the semiconductor strain sensor 7.

In addition, the adhesive 8 may also be applied to an area narrower than the semiconductor strain sensor 7. However, in this case, stability decreases. Nevertheless, the semiconductor strain sensor 7 can be easily affected by vibrations and the like in the blade, which is effective in a case where the effect of strain due to vibrations is observed.

In addition, application may be performed so as not to cause bubbles and foreign matter to be incorporated into the application region of the adhesive 8 immediately under the surface of the semiconductor strain sensor 7 facing the base substrate 9. This is because the semiconductor strain sensor 7 more accurately detects strain that occurs in the blade 1. In a case where voids are present in the adhesive 8, the bubbles act as a buffering agent and absorb impacts due to vibrations and the like, and the detection accuracy of the original strain of the blade is lowered.

The semiconductor strain sensor 7 is covered with a sealing material A 10 such as an epoxy region in order to prevent infiltration of foreign matter, moisture, and the like and prevent malfunction due to incident light. As well as the epoxy region, a silicone resin, ceramic, and the like are also effective.

Furthermore, the semiconductor strain sensor 7, the base substrate 9, and the adhesive 8 covered with the sealing material A 10 are also covered with a sealing material B 11 made of a rubber material or a urethane resin in order to prevent infiltration of foreign matter, moisture, and the like.

The reason why the sealing materials A 10 and B 11 are used as members for covering the semiconductor strain sensor 7 is that the heat-resistant temperature of glass-fiber reinforced plastic is as low as 200°C. That is, the semiconductor strain sensor 7 cannot be covered by a method of fixing a metal cover through welding.

Therefore, since the semiconductor strain sensor 7 is fixed to the inner wall surface of the blade 1 and has a double sealing structure protected by the sealing materials A 10 and B 11, the strain of the blade 1 can be detected with good accuracy over a long period of time.

In addition, although the sealing material B 11 is not used for sealing, the semiconductor strain sensor 7 can be operated. However, sealing with only the sealing material A 10 results in a high possibility of a reduction in strength and infiltration of foreign matter, moisture, and the like. Therefore, it is preferable to use the sealing material B 11 in addition to the sealing material A 10.

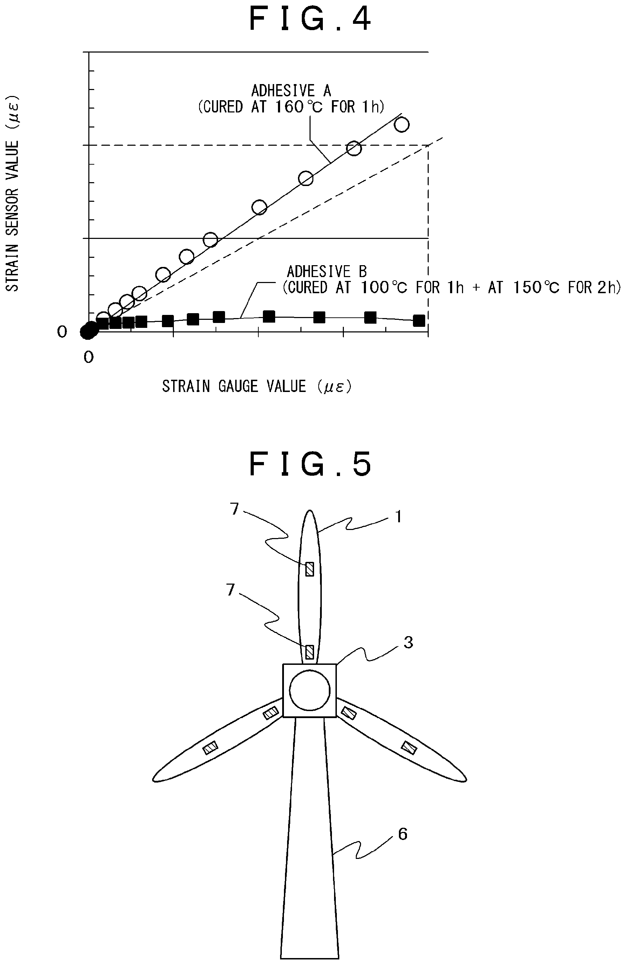

Next, the adhesive 8 for adhering and fixing the semiconductor strain sensor 7 to the inner wall surface of the blade 1 will be described with reference to Fig. 4. Fig. 4 is a graph showing variations in strain sensitivity (strain sensor value) due to the difference between adhesives that are used. The vertical axis represents the strain sensor value of the semiconductor strain sensor 7, and the horizontal axis represents, for comparison, a strain gauge value of a strain gauge in the related art, which is disposed close to the semiconductor strain sensor 7. In addition, although the strain gauge is disposed close to the semiconductor strain sensor 7, the strain gauge cannot be physically disposed at the same position as that of the semiconductor strain sensor 7. The close position is a measurement position that does not affect the measurement results of the strain gauge.

In addition, the graph of Fig. 4 represents the relative relationship between the strain sensor value and the strain gauge value, and specific numerical values in the vertical axis and the horizontal axis are omitted. The strain sensor value increases toward the upper side in the vertical axis, and the strain gauge value increases toward the rightward side in the horizontal axis.

As illustrated in Fig. 4, a sample in which the semiconductor strain sensor 7 was adhered and fixed to the blade 1 using each of a thermosetting adhesive A (cured at 160°C for 1 hour) and a thermosetting adhesive B (cured at 100°C for 1 hour and thereafter cured at 160°C for 1 hour) was examined. It could be seen that while the strain sensor value in the adhesive A is changed in proportion to the strain gauge value, the strain sensor value in the adhesive B is in a substantially steady state even though the strain gauge value increases when stress (strain) is applied to the sample, and an accurate strain gauge value was not shown.

The same test was conducted for examination on a plurality of different types of adhesive (for example, a two-component type adhesive C (cured at room temperature for 24 hours) and a two-component type adhesive D (cured at room temperature for 48 hours)). It could be seen that in a case where the modulus of elasticity of the adhesive at room temperature in a state in which the adhesive is cured is 1 GPa or higher, as in the adhesive A, the strain sensor value of the semiconductor strain sensor 7 has a value substantially proportionate to the strain gauge value of the strain gauge.

Therefore, the inventors succeeded in finding for the first time through the experiment that in order for the semiconductor strain sensor 7 to accurately detect strain (stress) that occurs in the blade 1, an adhesive having a modulus of elasticity of 1 GPa or higher at room temperature in a cured state needs to be used.

Here, the material of the adhesive 8 may be a material having a modulus of elasticity of 1 GPa or higher at room temperature in a cured state as described above, and a one-component type thermosetting epoxy adhesive may also be used. Otherwise, a two-component type thermosetting epoxy adhesive may also be used. It was confirmed through a plurality of experiments conducted by the inventors that the material is not limited to a specific material as long as the modulus of elasticity of the adhesive is 1 GPa or higher at room temperature.

A one-component type or two-component type thermosetting acrylic adhesive may also be used as long as the adhesive satisfies the modulus of elasticity. In addition, instead of the thermosetting adhesive, a room temperature curing adhesive or ultraviolet curing adhesive may also be used as long as the adhesive satisfies the modulus of elasticity. In a case where the room temperature curing adhesive is used, the adhesive does not need to be heated, which is effective. In addition, since the ultraviolet curing adhesive is cured through irradiation of ultraviolet rays, control of a curing position can be facilitated, or adhesion within a short period of time becomes possible.

As described above, according to the wind turbine generator of Example 1, strain can be detected by adhering the strain detection unit that detects the strain of the blade to the blade without embedment. In addition, since processing of the blade itself is unnecessary, there are no variations in the strain due to the processing of the blade, and the strain that occurs in the blade can be more accurately detected.

In addition, since the semiconductor strain sensor is adhered and fixed to the inner wall surface of the blade by the adhesive to detect the strain, the degree of freedom of an attachment position in the blade is high, and the semiconductor strain sensor can also be easily applied to a wind turbine generator in the related art without processing of the blade.

In addition, since the semiconductor strain sensor having a double sealing structure that prevents infiltration of foreign matter or moisture and incident light is used to detect the strain, the strain of the blade can be detected with high accuracy over a long period of time.

In addition, even in a case where the position where the strain of the blade 1 is detected is changed, the semiconductor strain sensor 8 may be detached and attached to another position.

Furthermore, compared to a strain gauge in the related art, the semiconductor strain sensor 7 has low power consumption and high strain detection sensitivity. Therefore, strain can be detected with low power consumption and high accuracy. In addition, in a case where the strain gauge or resistance wire is used as a detector, there may be cases where noise is also amplified due to the amplification of a signal by an operational amplifier or due to processing such as scale conversion. In contrast, in a case where the semiconductor strain sensor 7 is used, by employing those corresponding to the blade, a signal with reduced noise can be obtained.

In addition, in the description, the semiconductor strain sensor 7 is attached to the inner wall surface of the blade 1. However, the semiconductor strain sensor 7 may also be attached to an outer wall. In this case, the semiconductor strain sensor 7 comes into contact with the outside air. Therefore, compared to the attachment to the inner wall surface, it is not desirable from the viewpoint of protection of the semiconductor strain sensor 7 or devices such as a wireless module 12 described below.

In this case, since the blade 1 is attached to the outer wall surface, attachment is easily performed. Therefore, this is an effective embodiment for use such as primary measurement.

In addition, in the case of attachment to the outer wall surface, the blade 1 does not need to employ a hollow structure. Therefore, the present invention can also be applied to a wind turbine generator in the related art.

Attachment to the outer wall surface is an effective embodiment during regular inspection.

### Example 2

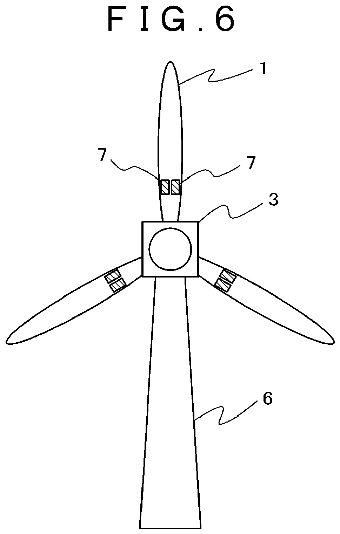

A wind turbine generator according to another embodiment of the present invention will be described with reference to Figs. 5 and 6. As in Fig. 2, Figs. 5 and 6 illustrate a view of a downwind type wind turbine generator viewed from the windward side.

The wind turbine generator illustrated in Fig. 5 is different from the wind turbine generator of Example 1 in that in a single blade 1, in addition to the semiconductor strain sensor 7 provided at the root portion of the blade 1, that is, in the vicinity of the connection portion between the blade 1 and the hub 2, the semiconductor strain sensor 7 is also provided on the inner wall surface of the blade 1 distant from the root portion of the blade 1 by a predetermined distance. Here, "in the vicinity of the connection portion" indicates a position of 500 mm from the root portion of the connection portion between the blade 1 and the hub 2. Since the blade is more likely to be affected by stress as the position is closer to the root, it is desirable that the position is close to the root. In addition, the attachment position of the semiconductor strain sensor may be a position of about 10% of the total length of the blade from the root for measurement.

In addition, the wind turbine generator illustrated in Fig. 6 is different from the wind turbine generator of Example 1 in that, in a single blade 1, a plurality of semiconductor strain sensors 7 are provided at the root portion of the blade 1, that is, in the vicinity of the connection portion between the blade 1 and the hub 2.

Fig. 6 illustrates an example in which two semiconductor strain sensors 7 are provided in a single blade 1.

In any of Figs. 5 and 6, other configurations in which the semiconductor strain sensor 7 is adhered and fixed to the inner wall surface of the blade 1 by the adhesive 8 via the base substrate 9 such as a metal substrate, and the like are the same as those of the wind turbine generator of Example 1.

In the wind turbine generator illustrated in Fig. 5, as described in Example 1, the highest strain (stress) of the blade 1 occurs at a position slightly distant from the connection portion between the blade 1 and the hub 2, that is, in the vicinity of the connection portion between the blade 1 and the hub 2 and there is a high possibility that the blade 1 may be damaged by the strain. Therefore, the semiconductor strain sensor 7 is provided on the inner wall surface of the blade 1 in the vicinity of the connection portion between the blade 1 and the hub 2.

In addition, in the longitudinal direction of the blade 1, there is a tendency toward an increase in strain (stress) in the vicinity of the center portion thereof (in the periphery of the root of the blade) due to the weight of the blade itself or centrifugal force caused by the rotation of the blade 1. Therefore, in this example, by providing the semiconductor strain sensor 7 even in the vicinity of the center portion in the longitudinal direction of the blade 1, the strain (stress) that occurs in the blade 1 can be detected with higher accuracy.

In the wind turbine generator illustrated in Fig. 6, by providing the plurality of semiconductor strain sensors 7 at the portion where the highest strain (stress) occurs in the blade 1, that is, in the vicinity of the connection portion between the blade 1 and the hub 2, strain (stress) that occurs at the root portion of the blade 1 can be detected in a wider range with good accuracy.

### Example 3

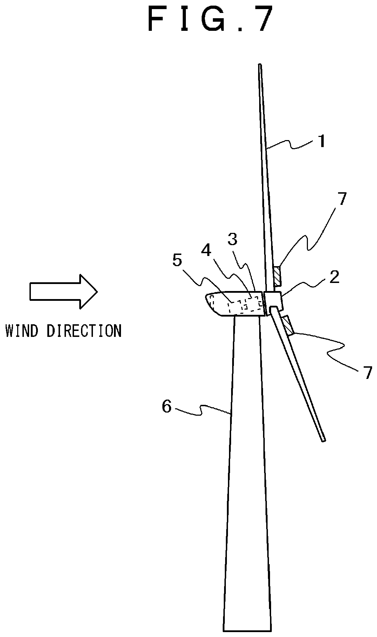

A wind turbine generator according to another embodiment of the present invention will be described with reference to Fig. 7. As in Fig. 1, Fig. 7 illustrates a downwind type wind turbine generator using the present invention.

While the wind turbine generator of Fig. 1 is provided with the semiconductor strain sensor 7 on the inner wall surface of the blade 1 on the windward side, the wind turbine generator illustrated in Fig. 7 is different from the wind turbine generator of Example 1 in that the semiconductor strain sensor 7 is provided on the inner wall surface of the blade 1 on the leeward side.

Other configurations in which the semiconductor strain sensor 7 is adhered and fixed to the inner wall surface of the blade 1 by the adhesive 8 via the base substrate 9 such as a metal substrate, and the like are the same as those of the wind turbine generator of Example 1.

As the wind blows against the blade 1, the entire blade 1 receives a stress at which the tip end of the blade 1 is likely to be folded on the leeward side. Therefore, as illustrated in Fig. 1, by providing the semiconductor strain sensor 7 on the inner wall surface of the blade 1 on the windward side, tensile strain (tensile stress) that occurs on the surface of the blade 1 on the windward side can be detected.

On the other hand, as illustrated in Fig. 7, by providing the semiconductor strain sensor 7 on the inner wall surface of the blade 1 on the leeward side, compressive strain (compressive stress) that occurs on the surface of the blade 1 on the leeward side can be detected.

In addition, by providing the semiconductor strain sensors 7 on both the inner wall surfaces of the blade 1 on the windward side and the leeward side, both the tensile strain on the inner wall surface of the blade 1 on the windward side and compressive strain on the surface of the blade 1 on the leeward side can be simultaneously detected. Accordingly, strain (stress) that occurs in the blade 1 can be detected with higher accuracy.

### Example 4

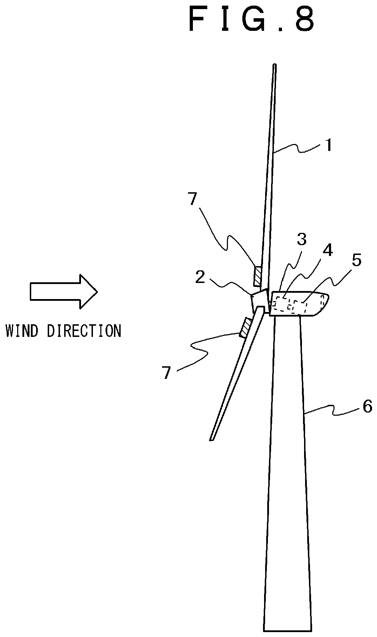

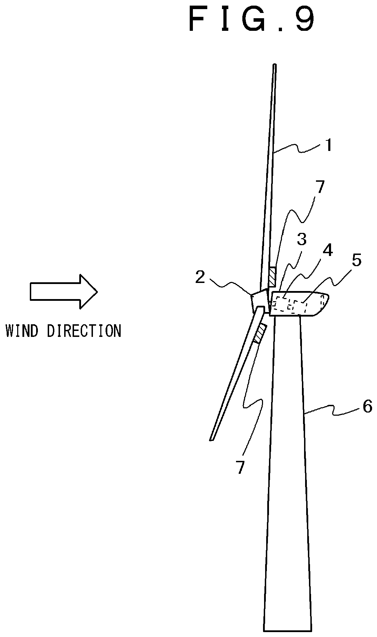

A wind turbine generator according to another embodiment of the present invention will be described with reference to Figs. 8 and 9. Figs. 8 and 9 illustrate an upwind type wind turbine generator using the present invention. Fig. 8 illustrates an example in which the semiconductor strain sensor 7 is provided on the inner wall surface of the blade 1 on the windward side in the upwind type wind turbine generator. In addition, Fig. 9 illustrates an example in which the semiconductor strain sensor 7 is provided on the inner wall surface of the blade 1 on the leeward side in the upwind type wind turbine generator.

As illustrated in Figs. 8 and 9, even in the upwind type wind turbine generator, by providing the semiconductor strain sensor 7 on the inner wall surface of the blade on the windward side or on the inner wall surface on the leeward side, strain (stress) that occurs in the blade 1 can be detected with good accuracy as in the downwind type wind turbine generator described in Examples 1 to 3.

### Example 5

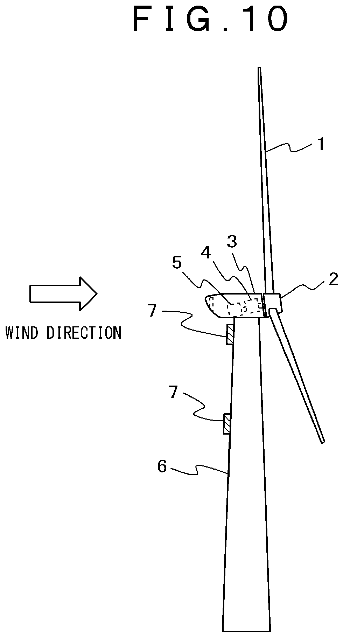

A wind turbine generator according to another embodiment of the present invention will be described with reference to Fig. 10. Fig. 10 illustrates an example in which the semiconductor strain sensor 7 described in Examples 1 to 4 is provided at the tower 6.

As described in Example 1, the wind turbine generator generates power as the wind turbine, that is, the hub 2 provided at one end of the nacelle 3 and the plurality of blades 1 rotate in the wind and wind force is converted into rotational energy. Since the hub 2 and the plurality of blades 1 in the wind are supported by the tower 6 via the nacelle 3, stress in the hub 2 and the plurality of blades 1 caused by the wind also results in strain (stress) in the tower 6.

In addition, since the tower 6 is a support column that supports the hub 2 and the plurality of blades 1 constituting the wind turbine, the nacelle 3 having the wind turbine provided at one end thereof, the speed increaser 4 and the generator 5 embedded in the nacelle 3, and the like, the tower 6 is always in a state of receiving such loads. Since the tower 6 also receives stress caused by the wind via the hub 2 and the plurality of blades 1 in a state of supporting such loads, in the case of fatigue of the tower 6 caused by the accumulation of the stress or a force of wind greater than the postulated force on the tower 6, there is concern that accidents such as collapse of the tower 6 may occur.

Therefore, the wind turbine generator of this embodiment is configured such that, as illustrated in Fig. 10, at least one or more semiconductor strain sensor 7 is provided in the tower 6, and strain that occurs in the tower 6 is monitored.

Other configurations in which the semiconductor strain sensor 7 is adhered and fixed to the inner wall surface of the tower 6 by the adhesive 8 via the base substrate 9 such as a metal substrate, and the like are the same as those of the wind turbine generator of Example 1.

Since the semiconductor strain sensor 7 is used as a unit for detecting the strain (stress) of the tower 6 as in the other examples, the degree of freedom of the position in the inner wall surface of the tower 6 to which the semiconductor strain sensor 7 is attached is high.

In the example of Fig. 10, one semiconductor strain sensor 7 is provided in the vicinity of a connection portion between the nacelle 3 and the tower 6 on which the highest strain (stress) is likely to be concentrated in the tower 6, and the other semiconductor strain sensor 7 is provided in the vicinity of the center portion of the tower 6 in the height direction of the tower 6, on which strain (stress) is also likely to be concentrated. "In the vicinity of the center portion" indicates a position of about 10% of the height of the tower from the connection portion of the tower 6. In addition, attachment to a position of about 500 mm from the connection portion of the tower 6 is desirable. This is because stress is more likely to be applied as the position is closer to the connection portion as described above.

Accordingly, strain in each of the vicinity of the connection portion between the nacelle 3 and the tower 6 on which strain (stress) is likely to be concentrated in the tower 6, and the vicinity of the center portion of the tower 6 in the height direction can be detected with good accuracy.

### Example 6

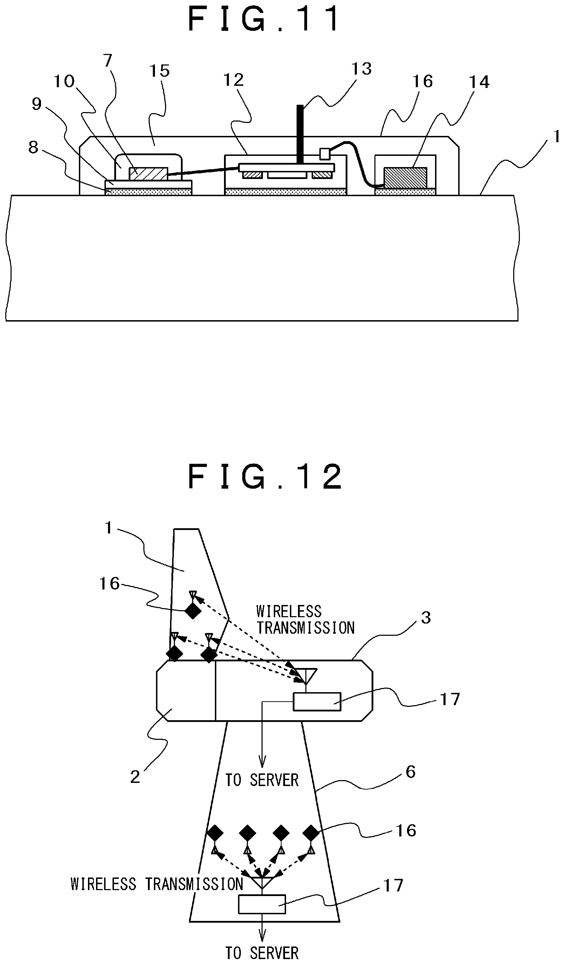

A monitoring system and a monitoring method of the wind turbine generator in the embodiment of the present invention will be described with reference to Figs. 11 and 12. Fig. 11 shows the configuration of a wireless strain sensor module 16 in which the wireless module 12, a battery 14, and the like are added to the configuration of Fig. 3 in Example 1.

As illustrated in Fig. 11, the semiconductor strain sensor is adhered and fixed to the inner wall surface of the blade 1 by the adhesive 8 via the base substrate 9 such as a metal substrate, and the wireless module 12 and the battery 14 are similarly adhered and fixed to the inner wall surface of the blade 1 by an adhesive.

The semiconductor strain sensor 7 is electrically connected to the wireless module 12 via a wire. In addition, the wireless module 12 is connected to the battery 14 to be supplied with power from the battery 14.

The battery 14 attached to the wireless module 12 may be a primary battery or a secondary battery. However, in a case where the semiconductor strain sensor 7 is attached to the outer wall surface of the blade 1 or the tower 6, it is desirable to employ particularly those that can be charged by natural energy such as solar energy from among secondary barriers. This is because the battery 14 can be charged by solar energy during the day and thus can be regularly charged. Therefore, even in a case where the battery runs down, the strain value detected by the semiconductor strain sensor 7 can be transmitted by the wireless module 12 as long as a predetermined amount of power can be obtained. That is, even when the battery 14 runs down, power is supplied to the semiconductor strain sensor 7 and the like by the power charged with the solar energy during the day, the strain value can be acquired. Therefore, a problem in power supply due to wireless connection unlike in wired connection can be solved.

The strain of the blade 1 detected by the semiconductor strain sensor 7 is transmitted by the wireless module 12 to be monitored by a reception device (not illustrated) provided in an external monitoring system. In addition, as illustrated in Fig. 11, the semiconductor strain sensor 7 is covered with the sealing material A 10 such as an epoxy resin, and is further covered with a sealing material C 15 made of a rubber material or urethane resin together with the wireless module 12 and the battery 14. Therefore, the semiconductor strain sensor 7 has a double sealing structure covered with the sealing materials A 10 and C 15. The reason why the sealing materials A 10 and C 15 are used as members for covering the semiconductor strain sensor 7 is that the heat-resistant temperature of glass-fiber reinforced plastic is as low as 200°C. That is, the semiconductor strain sensor 7 cannot be covered by a method of fixing a metal cover through welding.

Fig. 12 illustrates a schematic configuration of a monitoring system of the wind turbine generator using the present invention. As illustrated in Fig. 12, in the configuration, at least one or more wireless strain sensor module 16 is provided in at least one or more blade 1, and the strain value of the corresponding blade 1 detected by the semiconductor strain sensor 7 of the wireless strain sensor module 16 is transmitted to a monitoring server (not illustrated) of the wind turbine generator via a concentrator 17 provided in the nacelle 3 so as to be monitored.

Similarly, in the configuration, at least one or more wireless strain sensor module 16 is provided in the tower 6, and the strain value of the tower 6 detected by the semiconductor strain sensor 7 of the wireless strain sensor module 16 is transmitted to the monitoring server (not illustrated) of the wind turbine generator via the concentrator 17 provided in the tower 6 so as to be monitored.

Here, Fig. 12 illustrates an example in which the strain value of the blade 1 and the strain value of the tower 6 detected by the semiconductor strain sensors 7 of the wireless strain sensor modules 16 are transmitted to the monitoring server via the respective concentrators 17. However, in the configuration, the detected strain values may be directly transmitted to a reception device (not illustrated) of the monitoring server from the wireless strain sensor modules 16 respectively provided in the blade 1 and the tower 6 not through the concentrators 17 so as to be monitored.

The monitoring server of the wind turbine generator stops the wind turbine generator in a case where the strain value of the blade 1 and the strain value of the tower 6 received directly from the wireless strain sensor modules 16 of the blade 1 and the tower 6 or via the concentrators 14 exceed a predetermined value set in advance, and performs maintenance repair on the corresponding blade or the corresponding tower with strain values higher than the predetermined value.

As described above, according to the monitoring system of the wind turbine generator of this embodiment, the semiconductor strain sensor 7 is used to detect strain (stress) that occurs in the blade 1 or the tower 6, and thus strain (stress) can be monitored with high accuracy over a long period of time compared to measurement of strain (stress) by the strain gauge or resistance wire in the related art.

In addition, since the strain value detected by the semiconductor strain sensor 7 with good accuracy can be wirelessly transmitted to the monitoring server by the wireless module 12 provided in the vicinity of the semiconductor strain sensor 7 so as to be monitored, strain (stress) that occurs in the blade 1 and the tower 6 can be monitored without laying extra wires in the blade 1 or the tower 6.

In addition, since a predetermined strain value is set in the monitoring server in advance, in a case where an actual measurement value of the strain (stress) transmitted from the wireless strain sensor module 16 provided in the blade 1 or the tower 6 exceeds the predetermined strain value, the wind turbine generator is stopped and necessary maintenance repair such as replacement of the blade 1 or reinforcement of the tower can be performed. Accordingly, accidents such as damage to the blade or collapse of the tower can be pre-empted.

In addition, by monitoring the strain value of the semiconductor strain sensor 7, the life of the blade 1 or the tower 6 can be predicted.

In addition, by employing the configuration of the semiconductor strain sensor 7 of the present invention for a plurality of wind turbine generators, and detecting the strains of the blades 1 or the towers 6 between the wind turbine generators and measuring the differences between the values, time to perform maintenance of the plurality of wind turbine generators can be estimated.

When the plurality of wind turbine generators are constructed at close positions during close periods, the surrounding environments are in a similar state. Therefore, the strain value of a single wind turbine generator tends to be similar to those of the other wind turbine generators. In a case where the strain value has a different tendency from those of the other wind turbine generators, abnormality is determined. Therefore, the present invention contributes to the detection of the abnormal state.

In a case where such abnormality is detected, the abnormality is notified to a server or a manager of the wind turbine generator. Accordingly, the safety of the facility can be improved. In addition, by notifying the abnormality to a maintenance service provider and further designating components to be replaced in advance, the present invention contributes to a plan for maintenance.

Furthermore, from the strain value of the blade 1 or the strain value of the tower 6 detected by the semiconductor strain sensor 7, the wind pressure or wind speed can also be calculated. That is, by providing the semiconductor strain sensor 7 in the blade 1 or the tower 6, the wind pressure or wind speed can be measured.

### Example 7

A modification example of Example 6 will be described. The modification example of the example in which the strain value detected by the semiconductor strain sensor 7 is transmitted to the monitoring server or the like through communication using the wireless module 12 in Example 6 is described as Example 7.

In a case where the plurality of semiconductor strain sensors 7 are installed in the blade 1, one semiconductor strain sensor 7 collects strain values measured by the other semiconductor strain sensors 7 through a wire, light, or the like between the semiconductor strain sensors 7, and a plurality of the collected strain values are transmitted to the outside by the wireless module 12 connected to the one semiconductor strain sensor 7. In this case, the number of wireless modules 12 can be reduced, and the strain of the blade 1 can be transmitted by a single wireless module 12.

In addition, a plurality of semiconductor strain sensors 7 provided in a plurality of blades 1 or the tower 6 may transmit strain values through the wireless module 12 provided in the nacelle 3. In this case, the number of wireless modules 12 can be further reduced compared to the above-described example. Therefore, for example, information of a single wind turbine generator for each wireless module 12 can be monitored by the monitoring system.

In addition, the present invention is not limited to the above-described examples and includes various modification examples. For example, the above-described examples are described in detail in order to facilitate understanding of the present invention and are not necessarily intended to include all the described configurations. In addition, a portion of the configuration of a certain example can be substituted with the configuration of another example, and the configuration of another example can be added to the configuration of a certain example. In addition, a portion of the configuration of each example may employ additions, omissions, and substitutions of another configuration.

### REFERENCE SIGNS LIST

- 1: blade
- 2: hub
- 3: nacelle
- 4: speed increaser (gearbox)
- 5: generator
- 6: tower
- 7: semiconductor strain sensor
- 8: adhesive
- 9: base substrate
- 10: sealing material A
- 11: sealing material B
- 12: wireless module
- 13: antenna
- 14: battery
- 15: sealing material C
- 16: wireless strain sensor module
- 17: concentrator

## Claims

1. A wind turbine generator comprising:
a tower which is installed on the ground or the sea and acts as a support column of a generator;
a nacelle which is provided on the tower and has the generator embedded therein; and
a rotor which is provided at one end of the nacelle and is constituted by a hub and a plurality of blades that convert wind power into rotational energy,
wherein at least one or more blade among the plurality of blades is provided with a semiconductor strain sensor which detects strain that occurs in the corresponding blade.

2. The wind turbine generator according to claim 1,
wherein, in the blade, at least one or more semiconductor strain sensor is provided in the vicinity of a connection portion between the blade and the hub.

3. The wind turbine generator according to claim 1 or 2,
wherein the semiconductor strain sensor is provided on a windward side of the blade.

4. The wind turbine generator according to claim 1 or 2,
wherein the semiconductor strain sensor is provided on a leeward side of the blade.

5. The wind turbine generator according to any one of claims 1 to 4,
wherein the semiconductor strain sensor is also provided in the tower and detects strain that occurs in the tower.

6. The wind turbine generator according to any one of claims 1 to 5,
wherein the semiconductor strain sensor is fixed to the blade via an adhesive and is covered with a sealing material which prevents infiltration of moisture into the semiconductor strain sensor.

7. The wind turbine generator according to claim 6,
wherein, as the adhesive, an adhesive having a modulus of elasticity of 1 GPa or higher at room temperature in a cured state is used.

8. The wind turbine generator according to any one of claims 1 to 7,
wherein the semiconductor strain sensor includes a wireless transmission unit which wirelessly transmits a strain value of the blade detected to the outside.

9. A monitoring system of a wind turbine generator,
wherein the wind turbine generator includes:
a tower which is installed on the ground or the sea and acts as a support column of a generator;
a nacelle which is provided on the tower and has the generator embedded therein; and
a rotor which is provided at one end of the nacelle and is constituted by a hub and a plurality of blades that convert wind power into rotational energy,
at least one or more blade among the plurality of blades is provided with a semiconductor strain sensor which detects strain that occurs in the corresponding blade, and
by transmitting a strain value of the blade detected by the semiconductor strain sensor to an external monitoring server by a wireless communication unit, the strain value of the blade is monitored.

10. The monitoring system of a wind turbine generator according to claim 9,
wherein the semiconductor strain sensor is also provided in the tower and monitors a strain value that occurs in the tower.

11. The monitoring system of a wind turbine generator according to claim 10,
wherein, in a case where the strain value of the blade or tower detected by the semiconductor strain sensor exceeds a predetermined value, the wind turbine generator is stopped, and maintenance repair is performed on the corresponding blade or tower with a strain value that exceeds the predetermined value.

12. A monitoring method of a wind turbine generator,
wherein the wind turbine generator includes:
a tower which is installed on the ground or the sea and acts as a support column of a generator;
a nacelle which is provided on the tower and has the generator embedded therein; and
a rotor which is provided at one end of the nacelle and is constituted by a hub and a plurality of blades that convert wind power into rotational energy,
at least one or more blade among the plurality of blades is provided with a semiconductor strain sensor which detects strain that occurs in the corresponding blade, and
by transmitting a strain value of the blade detected by the semiconductor strain sensor to an external monitoring server by a wireless communication unit, the strain value of the blade is monitored.

13. The monitoring method of a wind turbine generator according to claim 12,
wherein the semiconductor strain sensor is also provided in the tower and monitors a strain value that occurs in the tower.

14. The monitoring method of a wind turbine generator according to claim 13,
wherein, in a case where the strain value of the blade or tower detected by the semiconductor strain sensor exceeds a predetermined value, the wind turbine generator is stopped, and maintenance repair is performed on the corresponding blade or tower with a strain value that exceeds the predetermined value.
